# EUROPÄISCHE PATENTSCHRIFT

(11) **EP 4 113 392 B1**
(45) Veröffentlichungstag und Bekanntmachung des Hinweises auf die Patenterteilung: **18.02.2026**
(21) Anmeldenummer: 22173754.7
(22) Anmeldetag: 17.05.2022
(51) Int. Cl.: G06N 3/0464, G06N 3/045, G06N 3/09, G06N 20/10

(54) **VERFAHREN ZUM PRÜFEN DER ZUVERLÄSSIGKEIT EINER KI-BASIERTEN OBJEKT-DETEKTION**
METHOD FOR TESTING THE RELIABILITY OF AN AI-BASED OBJECT DETECTION SYSTEM
PROCÉDÉ DE VÉRIFICATION DE LA FIABILITÉ D'UNE DÉTECTION DES OBJETS BASÉE SUR L'IA

(30) Priorität: 02.07.2021 DE 102021206981
(43) Veröffentlichungstag der Anmeldung: 04.01.2023
(73) Patentinhaber: Siemens Mobility GmbH, 80997 München (DE)
(72) Erfinder: Bahlmann, Claus, 10707 Berlin (DE); Hartmann, Benjamin, 12489 Berlin (DE)
(74) Vertreter: Siemens Patent Attorneys

(56) Entgegenhaltungen:
- US-A1- 2020 410 254
- US-A1- 2021 004 017

## Beschreibung

Die Erfindung betrifft ein Verfahren zur Validierung der Funktion eines KI-basierten Systems zur Detektion, Segmentierung und Klassifizierung von Objekten in einer Umgebung eines Transportmittels. Außerdem betrifft die Erfindung ein Verfahren zum Erzeugen von Feldvergleichsdaten. Ferner betrifft die Erfindung eine Validierungseinrichtung. Überdies betrifft die Erfindung ein Transportmittel.

Bei dem autonomen oder teil-autonomen Fahren muss die Umgebung eines solchen Fahrzeugs überwacht werden, um Kollisionen zu vermeiden. Bei dem Betrieb von Schienenfahrzeugen kommt es zum Beispiel gelegentlich vor, dass Objekte, wie zum Beispiel Personen oder Straßenfahrzeuge, Einkaufswagen, die auf die Schienen geworfen wurden, oder auch Felsbrocken oder umgestürzte Bäume, auf den Gleiskörper geraten und daher eine Gefahr für die Sicherheit des Schienenverkehrs darstellen und im Fall der Personen und Straßenfahrzeuge aufgrund der Möglichkeit einer Kollision mit einem fahrenden Schienenfahrzeug auch selbst hochgradig gefährdet werden. Daher müssen solche Objekte rechtzeitig erkannt werden, um für ein sich näherndes Schienenfahrzeug einen Bremsvorgang einzuleiten, so dass ein Zusammenstoß zwischen dem Schienenfahrzeug und den erkannten Objekten verhindert werden kann.

Mithin ist eine Detektion von möglichen Hindernissen jeglicher Form oder Gestalt, welche die Schienen blockieren, eine sicherheitskritische Notwendigkeit für alle Arten von Schienenfahrzeugen. Es gibt viele Lösungsansätze für dieses Problem, wobei auf künstlicher Intelligenz (abgekürzt mit KI) basierende Lösungsansätze am vielversprechendsten sind. Jede KI-basierte Lösung ist so gut wie ihre Trainingsdatenbasis, welche für Schienenverkehrsszenarios sehr aufwändig zusammenzustellen ist und zu annotieren ist.

In den letzten Jahren wurden mit auf Deep Learning basierenden Ansätzen der Computer-Vision eine hohe Effektivität im Vergleich zu klassischen Ansätzen, welche auf manueller Merkmalsanalyse beruhen, erreicht und sie sind daher sehr vielversprechend für die Bewältigung der Herausforderungen auf dem Gebiet des automatisierten bzw. fahrerlosen Betriebs von Schienenfahrzeugen. Für komplexe Szenarien, welche eine besonders ausgefeilte Wahrnehmung der Umgebung benötigen, wie zum Beispiel das fahrerlose Fahren von Schienenfahrzeugen, ist abzusehen, dass diese Aufgaben nicht ohne Deep Learning basierte Methoden zu lösen sind. Allerdings sind auf Deep Learning basierende Methoden nicht vollständig fehlerfrei und daher auch nicht völlig verlässlich. Ein Problem besteht darin, dass neuronale Netzwerke eine Art Überkonfidenz für Daten zeigen, die nicht Bestandteil eines Trainingsdatensatzes waren. In diesem Zusammenhang spricht man davon, dass die in der Realität auftretende Verteilung von Daten außerhalb der Verteilung der Trainingsdaten liegen. Diese Daten werden auch als OOD-Daten (OOD = out of distribution = außerhalb der Verteilung der Trainingsdaten) bezeichnet. Mithin kann eine Konfidenzmessung nicht als Maß für die Verlässlichkeit eines Ergebnisdatensatzes eines künstlichen neuronalen Netzwerks herangezogen werden.

Insbesondere bei dem Betrieb von hochautomatisierten fahrerlosen Fahrzeugen, wie zum Beispiel Straßenfahrzeuge oder Schienenfahrzeuge, wird für eine breite Anwendung eine erhöhte Sensitivität hinsichtlich des Auftretens von Daten außerhalb des Trainingsdatensatzes benötigt, damit das System in einem solchen Fall in einen sicheren Zustand versetzt werden kann. Auf maschinellem Lernen oder Deep Learning basierende Ansätze weisen heutzutage meist folgende Mängel auf:
- typische künstliche neuronale Netzwerke weisen keine inhärenten Mechanismen auf, mit denen ermittelt werden kann, ob ein Datenpunkt der Eingangsdaten von den Trainingsdaten umfasst ist oder nicht,
- künstliche neuronale Netzwerke weisen üblicherweise bei OOD-Daten eine geringere Trefferquote und Genauigkeit auf, auch dann, wenn sie eine hohe Konfidenz bei der Vorhersage erreichen.

Daher ist es schwierig zu entscheiden, ob eine Vorhersage oder Entscheidung eines künstlichen neuronalen Netzwerks vertrauenswürdig und verlässlich ist oder nicht.

Es gibt unterschiedliche Phänomene, die dazu führen können, dass Eingangsdaten außerhalb der Datenverteilung der Trainingsdaten liegen:
Eine solche Abweichung kann durch eine Variation des detektierten Objekts, beispielsweise durch Änderung des Objekttyps, durch die Bewegung eines Objekts, die zum Beispiel unterschiedliche Posen von Fußgängern oder Fahrzeugen nach sich zieht, oder unterschiedliche Größen von Objekten erfolgen.

Eine Abweichung kann auch durch Änderung der Umgebung oder des Detektorsystems verursacht werden. Beispielsweise kann sich das Wetter ändern, es kann regnen, schneien, es kann neblig sein. Die Lichtverhältnisse können sich ändern, es kann zu einer Blendung kommen, es können Reflektionen an Objekten auftreten, Objektive können verschmutzt werden und Sensoren können von Defekten heimgesucht werden.

Alle diese Änderungen können zu konfidenten aber falschen Vorhersagen führen. Dadurch kann zum Beispiel ein Signalzustand einer Verkehrsampel falsch gedeutet werden.

In US 2021/ 0 004 017 A1 werden hochauflösende Landkartendaten dazu genutzt, synthetische Sensordaten für autonom fahrende Fahrzeuge zu erzeugen.

In US 2020/ 0 410 254 A1 werden Kreuzungsbereiche in der Umgebung eines Fahrzeugs sensorbasiert in Echtzeit oder nahezu in Echtzeit unter Anwendung eines künstlichen neuronalen Netzwerks detektiert und lokalisiert. Es erfolgt eine Prüfung einer Funktion eines KI-basierten Systems zur Objektdetektion eines Fahrzeugs durch ein stationäres gleichfunktionierendes KI-basiertes System.

Es besteht also die Aufgabe, die Verlässlichkeit von KIbasierter Sensordatenauswertung, insbesondere im Bereich des autonomen oder assistierten Fahrens im Schienenverkehr, zu verbessern und damit die Verkehrssicherheit des automatisierten oder teilautomatisierten Betriebs solcher Systeme zu erhöhen.

Diese Aufgabe wird durch ein Verfahren zur Validierung der Funktion eines KI-basierten Systems zur Detektion und Klassifizierung von Objekten in einer Umgebung eines Transportmittels gemäß Patentanspruch 1, eine Validierungseinrichtung gemäß Patentanspruch 9 und ein Transportmittel gemäß Patentanspruch 10 gelöst. Bei dem erfindungsgemäßen Verfahren zur Validierung der Funktion eines KI-basierten Systems zur Detektion, Segmentierung und Klassifizierung von Objekten in einer Umgebung eines Transportmittels, vorzugsweise eines Schienenfahrzeugs, werden Sensordaten von der Umgebung des Transportmittels erfasst. Das Transportmittel kann neben einem Schienenfahrzeug auch ein Kraftfahrzeug oder ein Flugzeug, eine Drohne oder ein Fahrrad umfassen. Insbesondere für den Betrieb von Drohnen, eignet sich eine autonome Objektedetektion besonders, da Drohnen, die per Definition keinen Piloten an Bord haben, die entsprechende Sensorik für eine Steuerung des Flugs und ihre Navigation sowieso benötigen.

Ein solches KI-basiertes System lernt im Rahmen eines Trainingsverfahrens anhand von bestimmten Trainingsdaten die Detektion von Objekten. Ein solches auf maschinellem Lernen basierendes System kann zum Beispiel ein künstliches neuronales Netzwerk umfassen. Auf Basis der Sensordaten werden Eingangsdaten für das KI-basierte trainierte System, beispielsweise ein trainiertes künstliches neuronales Netzwerk, erzeugt. Die Eingangsdaten können zum Beispiel als Eingangsdatenvektor für das KI-basierte trainierte System auf Basis der Sensordaten erzeugt werden. Zusätzlich werden Merkmalsdaten von statischen Objekten auf Basis der Eingangsdaten oder auf Basis von Zwischenschichtdaten des trainierten KI-basierten Systems durch ein Hilfsvorhersagesystem ermittelt. Das Hilfsvorhersagesystem umfasst dabei ebenfalls ein auf maschinellem Lernen basierendes System, das mit denselben Trainingsdaten trainiert wurde wie das KI-basierte System zur Detektion von Objekten. Das Hilfsvorhersagesystem kann von dem trainierten KI-basierten System abgeleitet sein. Die von dem Hilfsvorhersagesystem ermittelten Merkmalsdaten können direkt die Bezeichnungen bzw. die Klassifizierung von Objekten betreffen, sie können aber auch extrahierte Merkmale aus den Eingangsdaten oder Zwischenschichtdaten betreffen. Als Zwischenschichtdaten sollen Daten des KI-basierten Systems verstanden werden, die zwischen den Eingangsdaten und den Ausgangsdaten des KI-basierten Systems erzeugt werden. Ein künstliches neuronales Netzwerk kann zum Beispiel als aus mehreren Schichten bestehend verstanden werden, in diesem Fall wären Zwischenschichtdaten Daten, die in einer zwischen der Eingangsschicht und der Ausgangsschicht befindlichen Zwischenschicht des künstlichen neuronalen Netzwerks erzeugt werden. Die ermittelten Merkmalsdaten werden dann mit Feldvergleichsdaten, welche Merkmale von statischen Objekten in der Umgebung umfassen, verglichen. Die Feldvergleichsdaten stammen aus einer Datenbank und können beispielsweise Daten aus einer digitalen Karte sein, die die Umgebung des Transportmittels darstellt. Die Feldvergleichsdaten umfassen Daten, die relevant sind für einen Abschnitt, in dem sich das Transportmittel gerade bewegt. Für den Fall, dass das Transportmittel ein Schienenfahrzeug ist, können die Daten Masten, Signale, Zeichen, Balisen, Stangen, Elektrokästen, Brücken, Weichen und Schienenkrümmungen umfassen. Diesen Objekten sind bekannte Positionen zugeordnet. Der Vergleich mit den Feldvergleichsdaten kann zum Beispiel dadurch erfolgen, dass während der Fahrt die Ego-Position des Transportmittels sowie seine Ausrichtung, beispielsweise mit Hilfe von Satellitennavigation, ermittelt wird. Den Feldvergleichsdaten sind ebenfalls die den einzelnen Objekten oder Merkmalen zugeordneten geographischen Positionen zugeordnet, so dass anhand der geschätzten Position eines detektierten Objekts die diesem Objekt zuzuordnenden Feldvergleichsdaten ermittelbar sind. Die Feldvergleichsdaten bilden eine Art "ground truth" für die Vorhersagen des Hilfsvorhersagesystems. Auf Basis des Vergleichsergebnisses wird schließlich die Verlässlichkeit des trainierten künstlichen neuronalen Netzwerks ermittelt.

Vorteilhaft lassen sich mit dem erfindungsgemäßen Verfahren Sicherheitsprobleme, die durch eine Änderung der Umgebung oder des Detektorsystems oder durch die Änderung von Umweltbedingungen hervorgerufen werden und eine korrekte Objekterkennung und Klassifizierung beeinträchtigen, erkennen. Beispielsweise kann sich das Wetter ändern, es kann regnen, schneien, es kann neblig sein. Die Lichtverhältnisse können sich ändern, es kann zu einer Blendung kommen, es können Reflektionen an Objekten auftreten, Objektive können verschmutzt werden und Sensoren können von Defekten heimgesucht werden. Auch kann auf Basis der Validierung ein defekter Sensor des Transportmittels erkannt werden, der für eine Objektdetektion und dessen Identifizierung genutzt wird. Alle diese Veränderungen werden durch das erfindungsgemäße Verfahren erkannt. Ist ein Sensor defekt, kann gegebenenfalls ein Fahrer darauf aufmerksam gemacht werden oder eine verstärkte Überwachung des Fahrbetriebs durch den Fahrer gefordert werden. Wie später noch erläutert, können Sensordaten des defekten Sensors bei der Objektidentifizierung auch einfach schwächer oder gar nicht gewichtet werden, um das Ergebnis nicht zu verfälschen.

Die erfindungsgemäße Validierungseinrichtung weist eine Sensordatenschnittstelle zum Empfangen von Sensordaten von einer Umgebung eines Transportmittels auf. Teil der erfindungsgemäßen Validierungseinrichtung ist auch ein KI-basiertes System, vorzugsweise ein trainiertes künstliches neuronales Netzwerk, zum Detektieren und Klassifizieren eines Objekts in der Umgebung des Transportmittels. Die erfindungsgemäße Validierungseinrichtung weist auch ein Hilfsvorhersagesystem zum Verarbeiten von Eingangsdaten oder von Zwischenschichtdaten des KI-basierten Systems, beispielsweise ein trainiertes künstliches neuronales Netzwerk, auf. Das Hilfsvorhersagesystem ist dazu ausgebildet, Merkmale von statischen Objekten zu ermitteln. Das Hilfsvorhersagesystem ist mit denselben Daten trainiert wie das KI-basierte System. Teil der erfindungsgemäßen Validierungseinrichtung ist auch eine Vergleichseinheit zum Vergleichen der ermittelten Merkmale mit Feldvergleichsdaten, welche Merkmale von statischen Objekten in der Umgebung des Transportmittels umfassen. Die erfindungsgemäße Validierungseinrichtung umfasst auch eine Validierungseinheit zum Ermitteln der Verlässlichkeit der Funktion des KI-basierten Systems auf Basis des Vergleichsergebnisses. Die erfindungsgemäße Validierungseinrichtung teilt die Vorteile des erfindungsgemäßen Verfahrens zur Validierung der Funktion eines KI-basierten Systems zur Detektion, Segmentierung und Klassifizierung von Objekten in einer Umgebung eines Transportmittels.

Bei dem erfindungsgemäßen Verfahren zum Erzeugen von Feldvergleichsdaten werden Sensordaten von der Umgebung eines Transportmittels erfasst, es werden Merkmale aus den Sensordaten durch einen Merkmalsextraktor, vorzugsweise eine Zwischenschicht des KI-basierten Systems extrahiert. Weiterhin werden die extrahierten Merkmale als Feldvergleichsdaten zusammen mit Positionsdaten gespeichert. Bei diesem Verfahren werden Feldvergleichsdaten vorteilhaft während des Betriebs des Transportmittels erzeugt. Dies ist von Vorteil, wenn von einem Abschnitt eines Schienennetzes keine Feldvergleichsdaten vorhanden sind. Dann kann eine Datenbank mit solchen Feldvergleichsdaten während des Fahrens aufgebaut werden. Da das Transportmittel in der Regel einen Streckenabschnitt wiederholt abfährt, können die so gewonnenen Feldvergleichsdaten nachfolgend für die Validierung genutzt werden. Hierbei können aktuell extrahierte Merkmale mit denjenigen Merkmalen verglichen werden, die vorher bereits als Feldvergleichsdaten gespeichert wurden. Dies kann zum Beispiel durch das Anpassen eines Gaußschen Mischmodels an die gespeicherten Merkmale erfolgen. Anschließend wird die Wahrscheinlichkeit ermittelt, dass die aktuell extrahierten Merkmale aus derselben Verteilung stammen wie die gespeicherten Merkmale. Falls die Wahrscheinlichkeit gering ist, besteht ein hohes Risiko, dass die aktuell erfassten Daten außerhalb der Trainingsdaten liegen.

Das erfindungsgemäße Transportmittel weist eine Sensoreinheit zum Erfassen von Sensordaten, vorzugsweise Bilddaten, von der Umgebung des Transportmittels auf. Zudem umfasst das erfindungsgemäße Transportmittel die erfindungsgemäße Validierungseinrichtung. Weiterhin weist das erfindungsgemäße Transportmittel eine Steuerungseinrichtung zum Steuern eines Fahrverhaltens des Transportmittels in Abhängigkeit von einem Validierungsergebnis der Validierungseinrichtung auf. Das erfindungsgemäße Transportmittel teilt die Vorteile der erfindungsgemäßen Validierungseinrichtung.

Einige Komponenten der erfindungsgemäßen Validierungseinrichtung können zum überwiegenden Teil in Form von Softwarekomponenten ausgebildet sein. Dies betrifft insbesondere die Sensordatenschnittstelle, das trainierte KI-basierte System, das Hilfsvorhersagesystem, die Vergleichseinheit und die Validierungseinheit.

Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher in einem Transportmittel vorhandene Rechnersysteme nach einer eventuellen Ergänzung durch zusätzliche Hardwareelemente, wie zum Beispiel eine Sensoreinheit, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um die durch Software realisierbaren Schritte des erfindungsgemäßen Verfahrens auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zur Validierung der Funktion eines KI-basierten Systems zur Detektion und Klassifizierung von Objekten in einer Umgebung eines Transportmittels umfassen die Feldvergleichsdaten eine digitale Karte der Umgebung des Transportmittels, in der Merkmale von statischen Objekten in der Umgebung des Transportmittels gespeichert sind. Die Umgebung umfasst bevorzugt das Umfeld eines Gleisabschnitts, auf dem sich das Transportmittel bewegt. Den statischen Objekten sind geographische Positionen zugeordnet. Detektiert das Transportmittel ein Objekt, so kann es, wenn seine eigene Position und die Richtung der Sensorik bekannt sind, den detektierten Objekten zuzuordnende Feldvergleichsdaten in der digitalen Karte ermitteln. Digitale Karten von den Gebieten, durch die ein Transportmittel fährt, sind meist bereits verfügbar und können daher mit geringem Anpassungsaufwand für die erfindungsgemäße Vergleichsoperation genutzt werden.

Bevorzugt umfasst das Hilfsvorhersagesystem ein künstliches neuronales Netzwerk, dass mit denselben Trainingsdaten trainiert wurde wie das KI-basierte System, das vorzugsweise ebenfalls ein trainiertes künstliches neuronales Netzwerk umfasst. Liegt ein Satz von Eingangsdaten außerhalb der Trainingsdaten, so wird das Hilfsvorhersagesystem ebenfalls auf Basis dieser Eingangsdaten Probleme haben, Objekte oder Objekten zugeordnete Merkmale korrekt zu klassifizieren, und bei dem Vergleich mit den Feldvergleichsdaten wird eine Abweichung ermittelt.

Das Hilfsvorhersagesystem kann auch ein künstliches neuronales Netzwerk umfassen, welches von dem KI-basierten System, das in diesem Fall ebenfalls ein trainiertes künstliches neuronales Netzwerk umfasst, abgeleitet wurde. Vorteilhaft verhält sich das Hilfsvorhersagesystem analog oder zumindest sehr ähnlich zu dem KI-basierten System, was zu besonders aussagekräftigen Vergleichsergebnissen bzw. Validierungsergebnissen beiträgt.

Alternativ oder zusätzlich kann das Hilfsvorhersagesystem auch eine Stützvektormaschine umfassen. Das Hilfsvorhersagesystem kann also auch anstatt eines künstlichen neuronalen Netzwerks auf einem anders ausgestalteten Algorithmus basieren. Die Einfachheit dieses Algorithmus bezieht sich darauf, dass der Algorithmus weniger Daten zum Lernen benötigt und schnellere Vorhersagen liefert, außerdem eignet er sich aufgrund der geringeren Hardwareanforderung auch für den Einsatz auf weniger leistungsfähigen Rechnersystemen als es bei KI-basierten Algorithmen der Fall ist.

Besonders bevorzugt ist das Hilfsvorhersagesystem identisch mit dem KI-basierten System. Vorteilhaft kann bei dieser Variante auf ein zusätzliches KI-basiertes System verzichtet werden. Stattdessen werden Zwischenschichtdaten oder Ergebnisdaten des KI-basierten Systems direkt mit den Feldvergleichsdaten verglichen.

Auch können die Ausgangsdaten des Hilfsvorhersagesystems denselben Typ aufweisen wie die Ausgangsdaten des KI-basierten Systems. Vorteilhaft können die Feldvergleichsdaten direkt mit Hilfe des KI-basierten Systems gewonnen oder ergänzt werden.

Die für die Erfassung von Sensordaten genutzte Sensorik kann eine Bildaufnahmeeinheit zur Aufnahme von zweidimensionalen oder gar dreidimensionalen Bilddaten von einem Umgebungsbereich eines Transportmittels aufweisen. Für den Fall von dreidimensionalen Bilddaten können diese direkt von einer Stereokamera aufgenommen werden oder durch sogenannte SAR-Bildgebung (SAR = Synthetic Aperture Radar) auch durch eine 2D-Bildaufnahmeeinheit erzeugt werden. Alternativ oder zusätzlich können auch Radarsensoren, Infrarotsensoren, Lidarsensoren oder ähnliches Teil der Sensorik sein. Die erfindungsgemäße Validierung wird in diesem Zusammenhang dazu genutzt, zu ermitteln, welche Art von Sensoren aktuell besonders unzuverlässig sind, weil beispielsweise eine für spezifische Sensorarten ungünstige Wetterlage oder ungünstige Lichtverhältnisse herrschen. Eine zuverlässige Objekterkennung kann in diesem Fall auf Basis von Sensordaten eines Teils der Sensoren weitergeführt werden. Alternativ kann auch eine Gewichtung der Sensordaten unterschiedlicher Sensoren auf Basis eines Validierungsergebnisses erfolgen. Auf diese Weise werden die Erkennung und Identifizierung von Objekten zuverlässiger und unabhängiger von variablen Umwelteinflüssen.

In einer Variante des erfindungsgemäßen Verfahrens zur Validierung der Funktion eines KI-basierten Systems zur Detektion und Klassifizierung von Objekten in einer Umgebung eines Transportmittels wird bei dem Start eines Transportmittels an einem Ausgangspunkt, wie zum Beispiel einer Haltestelle oder einem Bahnhof oder Bahnbetriebshof bzw. Rangierbahnhof eine Validierung ausgeführt, um so festzustellen, ob Sensoren defekt sind oder Wetterbedingungen ungünstig für mindestens einen Teil der Sensoren sind. Vorteilhaft kann auch bei dem Fehlen von digitalem Kartenmaterial für eine zu fahrende Strecke bei Kenntnis der Verhältnisse am Startpunkt eine solche Validierung vorab durchgeführt werden. Es kann auch bei mangelnder Validität eine höhere Aufmerksamkeit bei der Überwachung des Betriebs des Transportmittels oder eine Art Sicherheitsmodus, bei dem das Transportmittel mit einen niedrigen Geschwindigkeit betrieben wird, gewählt werden, um den ermittelten ungünstigen Umweltbedingungen Rechnung zu tragen.

Die Erfindung wird im Folgenden unter Hinweis auf die beigefügten Figuren anhand von Ausführungsbeispielen noch einmal näher erläutert. Es zeigen:
FIG 1 ein Flussdiagramm, welches ein Verfahren zur Validierung der Funktion eines trainierten neuronalen Netzwerks zur Detektion und Klassifizierung von Objekten in einer Umgebung eines Schienenfahrzeugs gemäß einem Ausführungsbeispiel der Erfindung veranschaulicht,
FIG 2 eine schematische Darstellung eines trainierten neuronalen Netzwerks,
FIG 3 eine schematische Darstellung eines Hilfsvorhersagesystems,
FIG 4 eine schematische Darstellung einer digitalen Karte, welche Feldvergleichsdaten liefert,
FIG 5 eine Validierungseinrichtung gemäß einem Ausführungsbeispiel der Erfindung,
FIG 6 ein Schienenfahrzeug gemäß einem Ausführungsbeispiel der Erfindung.

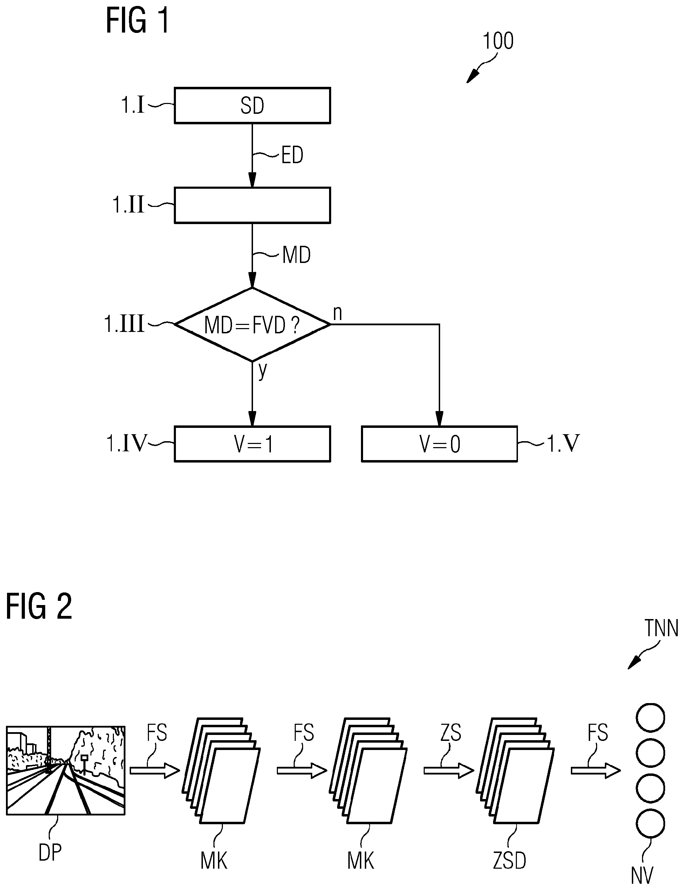

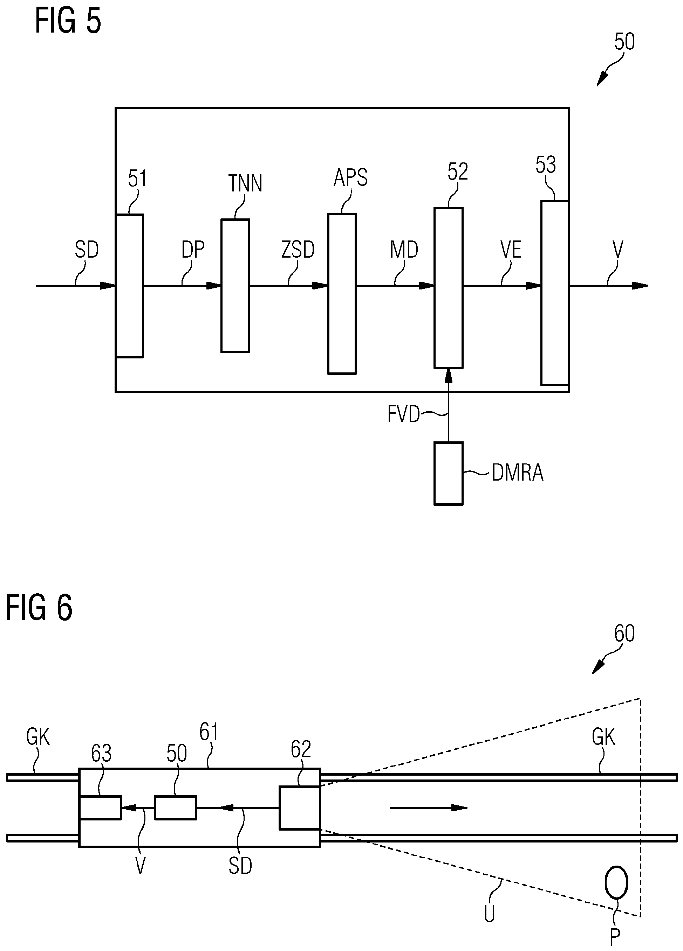

In FIG 1 ist ein Flussdiagramm 100 gezeigt, welches ein Verfahren zur Validierung der Funktion eines trainierten neuronalen Netzwerks TNN (in FIG 2 gezeigt) zur Detektion und Klassifizierung von Objekten in einer Umgebung eines Schienenfahrzeugs 61 veranschaulicht. Das Schienenfahrzeug 61 fährt auf einer Schienenstrecke durch eine Umgebung U (siehe FIG 6) und erfasst bei dem Schritt 1.I durch Sensoren, die an dem Schienenfahrzeug 61 angeordnet sind, Sensordaten SD von seiner Umgebung. Auf Basis der Sensordaten SD werden Eingangsdaten ED, beispielsweise in Form von Eingangsvektoren erzeugt, die in das trainierte neuronale Netzwerk TNN eingegeben werden.

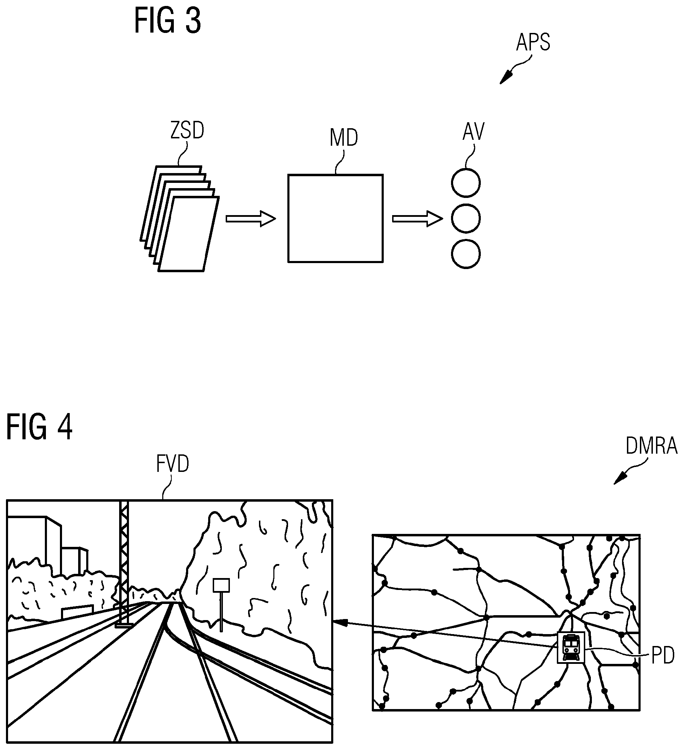

Bei dem Schritt 1.II werden auf Basis der Eingangsdaten ED oder von Zwischenschichtdaten ZSD die auf den Eingangsdaten ED basieren, Merkmalsdaten MD von statischen Objekten des trainierten neuronalen Netzwerks TNN durch ein Hilfsvorhersagesystem APS (in FIG 3 gezeigt) erzeugt.

Bei dem Schritt 1.III werden die ermittelten Merkmalsdaten MD mit Feldvergleichsdaten FVD verglichen. Die Feldvergleichsdaten umfassen Merkmale von statischen Objekten in der Umgebung des Schienenfahrzeugs. Wird nun ermittelt, dass die Feldvergleichsdaten FVD mit den Merkmalsdaten MD identisch sind bzw. nur maximal um einen vorbestimmten Schwellwert abweichen, was in FIG 1 mit "y" gekennzeichnet ist, so wird bei dem Schritt 1.IV festgestellt, dass die Objektdetektion valide ist. Dies ist in FIG 1 mit "V = 1" gekennzeichnet. D.h., wird bei dem Schritt 1.III eine Übereinstimmung der Merkmalsdaten MD mit den Feldvergleichsdaten FVD ermittelt, so wird die Validität V des trainierten künstlichen neuronalen Netzwerks TNN auf Basis dieses Vergleichsergebnisses bei dem Schritt 1.IV bestätigt. Wird bei dem Schritt 1.III dagegen ermittelt, dass die Feldvergleichsdaten FVD von den Merkmalsdaten MD des Hilfsvorhersagesystems APS abweichen, was in FIG 1 mit "n" gekennzeichnet ist, so wird bei dem Schritt 1.V eine reduzierte Validität des trainierten künstlichen neuronalen Netzwerks TNN angenommen, was in FIG 1 mit "V = 0" symbolisiert ist. In diesem Fall ist davon auszugehen, dass die Eingangsdaten ED des trainierten künstlichen neuronalen Netzwerks TNN von den ursprünglichen Trainingsdaten dieses künstlichen neuronalen Netzwerks TNN abweichen.

In FIG 2 ist eine schematische Darstellung eines trainierten künstlichen neuronalen Netzwerks TNN gemäß einem Ausführungsbeispiel der Erfindung gezeigt. Das trainierte künstliche neuronale Netzwerk weist eine Mehrzahl von Faltungsschichten FS, im Englischen auch als "convolutional layers" bezeichnet, zur Ermittlung von Merkmalen auf. Als Eingabedaten werden sogenannte Datenpunkte DP in das neuronale Netzwerk TNN eingegeben. Als Ergebnisdaten der Faltungsschichten FS werden sogenannte Merkmalskarten MK oder Zwischenschichtdaten ZSD ausgegeben. Die Zwischenschichtdaten ZSD werden von einer Zwischenschicht ZS des trainierten künstlichen neuronalen Netzwerks TNN erzeugt und werden für das Hilfsvorhersagesystem APS als Eingangsdaten genutzt. Als Ausgangsdaten des neuronalen Netzwerks TNN werden Netzwerk-Vorhersagedaten NV ausgegeben.

In FIG 3 ist eine schematische Darstellung eines Hilfsvorhersagesystems APS gemäß einem Ausführungsbeispiel der Erfindung gezeigt. Das Hilfsvorhersagesystem APS erhält die Zwischenausgabedaten ZSD des trainierten künstlichen neuronalen Netzwerks TNN als Eingangsdaten und wendet ein Modell MD, das beispielsweise selbst KI-basiert sein kann, auf diese Daten an. Als Ausgabedaten werden Vorhersagedaten AV des Hilfsvorhersagesystems APS erzeugt, die sich zum Beispiel auf erkannte Merkmale oder Klassifizierungen von Objekten beziehen.

In FIG 4 ist eine schematische Darstellung einer digitalen Karte DMRA, welche Feldvergleichsdaten FVD liefert, gezeigt. Die Feldvergleichsdaten verknüpfen zum Beispiel eine Position PD eines Schienenfahrzeugs, welche zum Beispiel mit einem Satellitennavigationssystem ermittelt wird, mit einer Gruppe von Feldvergleichsdaten FVD in der Nähe dieser Position PD. Die Feldvergleichsdaten FVD können zum Beispiel extrahierte Merkmale umfassen oder auch klassifizierte Objekte umfassen, die sich im Umfeld der ermittelten Position PD befinden. Links im Bild sind zum Beispiel ein Mast und ein Schild zu erkennen, die sich als Vergleichsobjekte anbieten.

In FIG 5 ist eine Validierungseinrichtung 50 gemäß einem Ausführungsbeispiel der Erfindung schematisch dargestellt. Die Validierungseinrichtung 50 umfasst eine Sensordatenschnittstelle 51 zum Empfangen von Sensordaten SD von einer Umgebung U eines Schienenfahrzeugs 61. Die Sensordaten SD werden zu einem Datenpunkt DP zusammengefasst, der in ein trainiertes künstliches neuronales Netzwerk TNN eingegeben wird. Das trainierte künstliche neuronale Netzwerk TNN ist dazu eingerichtet, ein Objekt in der Umgebung des Schienenfahrzeugs 61 zu detektieren und zu klassifizieren. Wie im Zusammenhang mit FIG 2 beschrieben, weist ein solches künstliches neuronales Netzwerk TNN einer Mehrzahl von Faltungsschichten auf, mit denen der Datenpunkt DP verarbeitet wird. Anstatt der Vorhersagedaten NV des künstlichen neuronalen Netzwerks TNN werden Zwischenschichtdaten ZSD an ein Hilfsvorhersagesystem APS übermittelt, das ebenfalls Teil der Validierungseinrichtung 50 ist. Dieses Hilfsvorhersagesystem APS verarbeitet die Zwischenschichtdaten ZSD des trainierten künstlichen neuronalen Netzwerks TNN und detektierte Objekte und klassifiziert diese Objekte als Merkmalsdaten MD. Die klassifizierten Objekte MD werden an eine Vergleichseinheit 52 übermittelt, die die klassifizierten Objekte mit Feldvergleichsdaten FVD aus einer digitalen Karte DMRA vergleicht. Beispielsweise sind in der digitalen Karte DMRA eine Mehrzahl von Objekten eingezeichnet und benannt. Mithin ist auch deren geographische Position bekannt. Ist die Position des Schienenfahrzeugs bekannt, so kann leicht ein Vergleich der Objektklassifikationen mit digitalen Kartendaten bzw. Feldvergleichsdaten FVD der digitalen Karte DMRA durchgeführt werden. Das Vergleichsergebnis VE wird an eine Validierungseinheit 53 übermittelt, die auf Basis des Vergleichsergebnisses VE entscheidet, ob das trainierte, neuronale Netzwerk TNN ausreichend verlässlich ist und ob insbesondere der Datenpunkt DP der Eingangsdaten des neuronalen Netzwerks innerhalb der Menge der Trainingsdaten liegt oder möglicherweise aufgrund einer Änderung von Umweltbedingungen diese Eingangsdaten von den Trainingsdaten stark abweichen.

In FIG 6 ist eine schematische Darstellung 60 eines Schienenfahrzeugs 61 gemäß einem Ausführungsbeispiel der Erfindung veranschaulicht. Das links in FIG 6 schematisch dargestellte Schienenfahrzeug 61 fährt von links nach rechts in Pfeilrichtung auf einem Gleiskörper GK und erfasst dreidimensionale Bilddaten als Sensordaten SD von einem vor dem Schienenfahrzeug 61 liegenden Umgebungsbereich **U.** Hierzu umfasst das Schienenfahrzeug 61 in seinem Frontbereich eine Kameraeinheit 62. Es werden Sensordaten SD von einer Umgebung U des Schienenfahrzeugs 61 erfasst, die auch einen Mast P umfassen. Die Sensordaten SD werden an eine Validierungseinrichtung 50 übermittelt, die ebenfalls Teil des Schienenfahrzeugs 61 ist und den in FIG 5 veranschaulichten Aufbau hat. Die Validierungseinrichtung 50 ermittelt nun auf Basis der Sensordaten SD, ob sich die erfassten Sensordaten innerhalb des Trainingsdatenbereichs eines zur Objekterkennung genutzten künstlichen neuronalen Netzwerks TNN befinden oder ob sich die Umweltbedingungen möglicherweise derart verändert haben, dass eine Objektdetektion und Klassifikation nicht mehr verlässlich sind. Das Validierungsergebnis V wird an eine von dem Schienenfahrzeug 61 umfasste Steuereinrichtung 63 übermittelt, welche für den Fall, dass keine Verlässlichkeit der Sensordaten SD gegeben ist, eine adäquate Reaktion auslöst. Beispielsweise kann es sich dabei um ein Bremsmanöver kombiniert mit einer Meldung handelt, dass das Schienenfahrzeug 61 nur durch einen Fahrer weitergesteuert werden darf. Alternativ kann auch eine Gewichtung von Sensordaten SD bei der Auswertung und Objektklassifizierung geändert werden oder auf andere Sensoren umgeschaltet werden, deren Sensordaten möglicherweise verlässlicher sind, um so ein sicheres sensordatengestütztes Fahren weiter zu ermöglichen.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zur Validierung der Funktion eines KI-basierten Systems (TNN) zur Detektion Segmentierung und Klassifizierung von Objekten in einer Umgebung (U) eines Transportmittels (61), aufweisend die Schritte:
- Erfassen von Sensordaten (SD) von der Umgebung (U) des Transportmittels (61),
- Erzeugen von Eingangsdaten (ED, DP) für das KI-basierte System (TNN) auf Basis der Sensordaten (SD),
- Erzeugen von Merkmalsdaten (MD) von statischen Objekten auf Basis der Eingangsdaten (ED, DP) oder von Zwischenschichtdaten (ZSD) des KI-basierten Systems (TNN) durch ein Hilfsvorhersagesystem (APS),
- Vergleichen der ermittelten Merkmalsdaten (MD) mit Feldvergleichsdaten (FVD), welche Merkmale von statischen Objekten in der Umgebung (U) umfassen,
- Ermitteln der Verlässlichkeit (V) des KI-basierten Systems (TNN) auf Basis des Vergleichsergebnisses (VE),
wobei die Validierung der Funktion dazu genutzt wird zu ermitteln, welche Art von Sensoren aktuell besonders unzuverlässig sind, und eine zuverlässige Objekterkennung auf Basis eines Teils der Sensoren weitergeführt wird oder eine Gewichtung der Sensordaten unterschiedlicher Sensoren auf Basis des Validierungsergebnisses bei einer Objekterkennung erfolgt.

2. Verfahren nach Anspruch 1, wobei die Feldvergleichsdaten (FVD) eine digitale Karte (DMRA) der Umgebung (U) des Transportmittels (60) umfassen, in der Merkmale von statischen Objekten in der Umgebung (U) des Transportmittels (61) gespeichert sind.

3. Verfahren nach Anspruch 1 oder 2, wobei die Umgebung (U) das Umfeld eines Gleisabschnitts (GK) umfasst, auf dem sich das Transportmittel (61) bewegt.

4. Verfahren nach einem der vorstehenden Ansprüche, wobei das Hilfsvorhersagesystem (APS) ein künstliches neuronales Netzwerk umfasst, dass mit denselben Trainingsdaten trainiert wurde wie das KI-basierte System (TNN).

5. Verfahren nach einem der vorstehenden Ansprüche, wobei das Hilfsvorhersagesystem (APS) ein künstliches neuronales Netzwerk umfasst, welches von dem KI-basierten System (TNN) abgeleitet wurde.

6. Verfahren nach einem der vorstehenden Ansprüche, wobei das Hilfsvorhersagesystem (APS) eine Stützvektormaschine umfasst.

7. Verfahren nach einer der vorstehenden Ansprüche, wobei das Hilfsvorhersagesystem (APS) identisch mit dem KI-basierten System (TNN) ist.

8. Verfahren nach einem der vorstehenden Ansprüche, wobei die Ausgangsdaten (AV) des Hilfsvorhersagesystems (APS) denselben Typ aufweisen wie die Ausgangsdaten (NV) des KI-basierten Systems (TNN).

9. Validierungseinrichtung (50), aufweisend:
- eine Sensordatenschnittstelle (51) zum Empfangen von Sensordaten (SD) von einer Umgebung (U) eines Transportmittels (61),
- ein KI-basiertes System (TNN) zum Detektieren und Klassifizieren eines Objekts in der Umgebung (U) des Transportmittels (61),
- ein Hilfsvorhersagesystem (APS) zum Verarbeiten von Eingangsdaten (ED, DP) oder Zwischenschichtdaten (ZSD) des KI-basierten Systems (TNN), wobei das Hilfsvorhersagesystem (APS) dazu ausgebildet ist, Merkmale (MD) von statischen Objekten zu ermitteln,
- eine Vergleichseinheit (52) zum Ermitteln eines Vergleichsergebnisses (VE) auf Basis der ermittelten Merkmale (MD) und der Feldvergleichsdaten (FVD), welche Merkmale von statischen Objekten in der Umgebung (U) des Transportmittels (61) umfassen,
- eine Validierungseinheit (53) zum Ermitteln der Verlässlichkeit (V) des KI-basierten Systems (TNN) auf Basis des Vergleichsergebnisses (VE), wobei die Validierung der Funktion dazu genutzt wird zu ermitteln, welche Art von Sensoren aktuell besonders unzuverlässig sind, und eine zuverlässige Objekterkennung auf Basis eines Teils der Sensoren weitergeführt wird oder eine Gewichtung der Sensordaten unterschiedlicher Sensoren auf Basis des Validierungsergebnisses bei einer Objekterkennung erfolgt.

10. Transportmittel (61), aufweisend
- eine Sensoreinheit (62) zum Erfassen von Sensordaten (SD) von der Umgebung des Transportmittels (61),
- eine Validierungseinrichtung (50) nach Anspruch 9,
- eine Steuereinrichtung (63) zum Steuern des Transportmittels (61) in Abhängigkeit eines Validierungsergebnisses (VE) der Validierungseinrichtung (50).

11. Computerprogrammprodukt mit einem Computerprogramm, welches direkt in eine Speichereinheit einer Steuereinrichtung (63) eines Transportmittels (61) ladbar ist, mit Programmabschnitten, um alle Schritte eines Verfahrens nach einem der Ansprüche 1 bis 8 auszuführen, wenn das Computerprogramm in der Steuereinrichtung (63) ausgeführt wird.

12. Computerlesbares Medium, auf welchem von einer Rechnereinheit ausführbare Programmabschnitte gespeichert sind, um alle Schritte des Verfahrens nach einem der Ansprüche 1 bis 8 auszuführen, wenn die Programmabschnitte von der Rechnereinheit ausgeführt werden.

## Claims

1. Method for validating the function of an AI-based system (TNN) for detecting, segmenting and classifying objects in an environment (U) of a transport means (61), having the steps:
- detecting sensor data (SD) from the environment (U) of the transport means (61),
- generating input data (ED, DP) for the AI-based system (TNN) based on the sensor data (SD),
- generating characteristic data (MD) of static objects based on the input data (ED, DP) or intermediate layer data (ZSD) of the AI-based system (TNN) by way of an auxiliary prediction system (APS),
- comparing the ascertained characteristic data (MD) with field comparison data (FVD), which comprises characteristics of static objects in the environment (U),
- ascertaining the reliability (V) of the AI-based system (TNN) based on the comparison result (VE),
wherein validating the function is used to ascertain which type of sensors are currently especially unreliable, and reliable object recognition is continued based on a part of the sensor or a weighting of the sensor data of different sensors is performed based on the validation result with an instance of object recognition.

2. Method according to claim 1, wherein the field comparison data (FVD) comprises a digital map (DMRA) of the environment (U) of the transport means (60), in which map, characteristics of static objects in the environment (U) of the transport means (61) are stored.

3. Method according to claim 1 or 2, wherein the environment (U) comprises the periphery of a track section (GK) on which the transport means (61) moves.

4. Method according to one of the preceding claims, wherein the auxiliary prediction system (APS) comprises an artificial neural network which was trained with the same training data as the AI-based system (TNN).

5. Method according to one of the preceding claims, wherein the auxiliary prediction system (APS) comprises an artificial neural network which was derived from the AI-based system (TNN) .

6. Method according to one of the preceding claims, wherein the auxiliary prediction system (APS) comprises a support vector machine.

7. Method according to one of the preceding claims, wherein the auxiliary prediction system (APS) is identical to the AI-based system (TNN).

8. Method according to one of the preceding claims, wherein the output data (AV) of the auxiliary prediction system (APS) is of the same type as the output data (NV) of the AI-based system (TNN).

9. Validation facility (50), having
- a sensor data interface (51) for receiving sensor data (SD) from an environment (U) of a transport means (61),
- an AI-based system (TNN) for detecting and classifying an object in the environment (U) of the transport means (61),
- an auxiliary prediction system (APS) for processing input data (ED, DP) or intermediate layer data (ZSD) of the AI-based system (TNN), wherein the auxiliary prediction system (APS) is designed to ascertain characteristics (MD) of static objects,
- a comparison unit (52) for ascertaining a comparison result (VE) based on the ascertained characteristics (MD) and the field comparison data (FVD), which comprises characteristics of static objects in the environment (U) of the transport means (61),
- a validation unit (53) for ascertaining the reliability (V) of the AI-based system (TNN) based on the comparison result (VE), wherein validating the function is used to ascertain which type of sensors are currently especially unreliable, and reliable object recognition is continued based on a part of the sensor or a weighting of the sensor data of different sensors is performed based on the validation result with an instance of object recognition.

10. Transport means (61), having
- a sensor unit (62) for detecting sensor data (SD) from the environment of the transport means (61),
- a validation facility (50) according to claim 9,
- a control facility (63) for controlling the transport means (61) depending on a validation result (VE) of the validation facility (50).

11. Computer program product with a computer program, which can be loaded directly into a memory unit of a control facility (63) of a transport means (61), with program sections for performing all steps of a method according to one of claims 1 to 8, when the computer program is executed in the control facility (63).

12. Computer-readable medium, on which program sections which can be executed by a computing unit are stored for carrying out all steps of the method according to one of claims 1 to 8, when the program sections are executed by the computing unit.

## Revendications

1. Procédé de validation du fonctionnement d'un système (TNN) reposant sur l'IA pour la détection, la segmentation et le classement d'objets dans un environnement (U) d'un moyen (61) de transport, comportant les stades :
- saisie de données (SD) de capteur par l'environnement (U) du moyen (61) de transport,
- production sur la base des données (SD) de capteur, de données (ED, DP) d'entrée pour le système (TNN) reposant sur l'IA,
- production de données (MD) de caractéristique d'objets statiques sur la base des données (ED, DP) d'entrée ou de données (ZSD) de couche intermédiaire du système (TNN) reposant sur l'IA par un système (APS) de prédiction auxiliaire,
- comparaison des données (MD) de caractéristique déterminées à des données (FVD) de comparaison de terrain, qui comprennent des caractéristiques d'objets statiques dans l'environnement (U),
- détermination, sur la base du résultat (VE) de la comparaison, de la fiabilité (V) du système (TNN) reposant sur l'IA,
dans lequel on utilise la validation du fonctionnement pour déterminer le type de capteurs en cours, qui ne sont particulièrement pas fiables, et on continue une identification fiable d'objets sur la base d'une partie des capteurs ou une pondération des données de capteurs différents a lieu sur la base du résultat de la validation, lors d'une identification d'objets.

2. Procédé suivant la revendication 1, dans lequel les données (FVD) de comparaison de terrain comprennent une carte (DMRA) numérique de l'environnement (U) du moyen (60) de transport, dans laquelle des caractéristiques d'objets statiques dans l'environnement (U) du moyen (61) de transport sont mises en mémoire.

3. Procédé suivant la revendication 1 ou 2, dans lequel l'environnement (U) comprend l'environnement d'un tronçon (GK) de voie, sur lequel se déplace le moyen (61) de transport.

4. Procédé suivant l'une des revendications précédentes, dans lequel le système (APS) de prédiction auxiliaire comprend un réseau neuronal artificiel, qui a été entraîné avec les mêmes données d'entraînement que le système (TNN) reposant sur l'IA.

5. Procédé suivant l'une des revendications précédentes, dans lequel le système (APS) de prédiction auxiliaire comprend un réseau neuronal artificiel, qui a été déduit du système (TNN) reposant sur l'IA.

6. Procédé suivant l'une des revendications précédentes, dans lequel le système (APS) de production auxiliaire comprend une machine à vecteur d'appui.

7. Procédé suivant l'une des revendications précédentes, dans lequel le système (APS) de production auxiliaire est identique au système (TNN) reposant sur l'IA.

8. Procédé suivant l'une des revendications précédentes, dans lequel les données (AV) de sortie du système (APS) de prédiction auxiliaire ont le même type que les données (NV) de sortie du système (TNN) reposant sur l'IA.

9. Dispositif (50) de validation, comportant :
- une interface (51) de données de capteur pour la réception de données (SD) de capteur d'un environnement (U) d'un moyen (61) de transport,
- un système (TNN) reposant sur l'IA de détection et de classement d'un objet dans l'environnement (U) du moyen (61) de transport,
- un système (APS) de prédiction auxiliaire pour le traitement de données (ED, DP) d'entrée ou de données (ZSD) de couche intermédiaire du système (TNN) reposant sur l'IA, dans lequel le système (APS) de prédiction auxiliaire est constitué pour déterminer des caractéristiques (MD) d'objets statiques,
- une unité (52) de comparaison pour la détermination d'un résultat (VE) de comparaison sur la base des caractéristiques (MD) déterminées et des données (FVD) de comparaison de terrain, qui comprennent des caractéristiques d'objets statiques dans l'environnement (U) du moyen (61) de transport,
- une unité (53) de validation pour la détermination sur la base du résultat (VE) de la comparaison, de la fiabilité (V) du système (TNN) reposant sur l'IA, dans lequel on utilise la validation du fonctionnement pour déterminer le type de capteurs en cours, qui ne sont pas particulièrement fiables, et on continue une identification fiable d'objets sur la base d'une partie des capteurs ou une pondération des données de capteurs différents a lieu sur la base du résultat de la validation, lors d'une identification d'objets.

10. Moyen (61) de transport, comportant
- une unité (62) de capteur pour la détection de données (SD) de capteur de l'environnement du moyen (61) de transport,
- un dispositif (50) de validation suivant la revendication 9,
- un dispositif (63) de commande pour la commande du moyen (61) de transport en fonction d'un résultat (VE) de validation du dispositif (50) de validation.

11. Produit de programme d'ordinateur comprenant un programme d'ordinateur, qui peut être chargé directement dans une unité de mémoire d'un dispositif (63) de commande d'un moyen (61) de transport, comportant des parties de programme pour exécuter tous les stades d'un procédé suivant l'une des revendications 1 à 8, lorsque le programme d'ordinateur est exécuté dans le dispositif (63) de commande.

12. Support, exécutable par ordinateur, sur lequel sont mises en mémoire des parties de programme pouvant être exécutées par une unité informatique, afin d'effectuer tous les stades du procédé suivant l'une des revendications 1 à 8, lorsque les parties de programme sont exécutées par l'unité informatique.
